# EUROPEAN PATENT APPLICATION

(11) **EP 3 598 365 A1**
(43) Date of publication of application: **22.01.2020**
(21) Application number: 18183997.8
(22) Date of filing: 17.07.2018
(51) Int. Cl.: G06Q 20/02, G06Q 20/40

(54) **TRAFFIC SHAPING FOR TRANSACTIONS OF A DISTRIBUTED DATABASE SYSTEM**

(71) Applicant: Siemens Aktiengesellschaft, 80333 München (DE)
(72) Inventor: Falk, Rainer, 85586 Poing (DE)

(57) **Abstract**

The invention generally relates to techniques associated with the insertion of transactions into a distributed database system such as a blockchain. The invention more specifically relates to traffic shaping for the insertion. According to various examples, each transaction of the plurality of transactions is classified in accordance with a plurality of categories. Buffer queues can be maintained for the plurality of categories. Then, the insertion can be prioritizes across the buffer queues.

## Description

### TECHNICAL FIELD

Various embodiments of the invention generally relate to traffic shaping for insertion of transactions into a distributed database system, such as a blockchain.

### BACKGROUND OF THE INVENTION

The technology of blockchains and "distributed ledgers" is currently widely discussed. Blockchains and distributed ledgers can be generally implemented as distributed database systems (DBSs). There are various use cases for DBSs including decentralized payment systems - such as cryptocurrencies including bitcoin - and novel tools for the financial industry. For example, it is possible to implement transactions between companies without intermediary agents or clearing in a protected manner. This facilitates novel business models not relying on a trusted intermediate agent. Costs per transaction are reduced. It is possible to flexibly offer new digital services without the need of having to set up a dedicated infrastructure and trust relationships.

Industrial applications such as industrial automated systems have specific requirements such as safety, in particular functional safety, availability (limited downtime), support of real-time transactions, long-term operation. It has been found that conventional implementations of blockchains do not fulfill or only fulfill to a limited degree such requirements.

For example, Andreas M. Antonopoulos "Mastering Bitcoin" O'Reilly (2010), First edition discloses at section "Transaction Age, Fees, and Priority" of Chapter 8: Mining and Consensus that a bitcoin node selects a priority metric to each transaction and adds the highest priority transactions first. Transactions are prioritized based on the "age" of the unspent transaction output, UTXO, that is being spent in their inputs, allowing for old and high-value inputs to be prioritized over newer and smaller inputs. Such techniques face the restriction that the prioritization is based on an input age and thus is static.

Documents US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 3028140 B1, EP 17175275 and US 8 843 761 B2 are known.

### SUMMARY

Therefore, a need exists for advanced techniques of DBSs such as blockchains. Specifically, a need exists for techniques of insertion of transactions into DBSs which overcome or mitigate at least some of the above-identified drawbacks or restrictions of reference implementations of DBSs.

This need is met by the features of the independent claims. The features of the dependent claims define embodiments.

A device includes a receive module. The receive module is configured to receive a plurality of transactions for insertion into a DBS. The device also includes a classify module which is configured to classify each transaction of the plurality of transactions, in accordance with a plurality of categories. The device includes a buffer module which is configured to maintain, for each category of the plurality of categories, a respective buffer queue that includes the respectively classified transactions of the plurality of transactions. The device also includes a prioritize module that is configured to prioritize insertion of the plurality of transactions into the DBS across the buffer queues.

A computer-implemented method includes receiving a plurality of transactions for insertion into a DBS. The method also includes classifying each transaction of the plurality of transactions in accordance with a plurality of categories. The method also includes, for each categories of the plurality of categories: maintaining a respective buffer queue comprising the respectively classified transactions of the plurality of transactions. The method also includes prioritizing insertion of the plurality of transactions into the DBS across the buffer queues.

A computer program product or computer program includes program code that can be executed by at least one processor. Executing the program code causes the at least one processor to perform a method. The method includes receiving a plurality of transactions for insertion into a DBS. The method also includes classifying each transaction of the plurality of transactions in accordance with a plurality of categories. The method also includes, for each categories of the plurality of categories: maintaining a respective buffer queue comprising the respectively classified transactions of the plurality of transactions. The method also includes prioritizing insertion of the plurality of transactions into the DBS across the buffer queues.

Unless explicitly stated otherwise the terms "perform", "calculate", "computer-implemented", "calculate", "establish", "generate", "configure", "reconstruct" and the like preferably relate to actions and/or processes and/or processing steps which modify data and/or which generate data and/or which transform data in other data. Data can be represented by physical quantities or be present as physical quantities, e.g., as electrical pulses. In particular, the term "computer" should be interpreted broadly to cover all electronic devices having data processing capabilities. Computers can, thus, be implemented by personal computers, servers, memory programmable controllers, handheld computer systems, pocket PC devices, wireless communication devices and other communication devices that can process data, processors and other electronic devices for processing data.

In the context of the present disclosure "computer-implemented" can relate to an implementation of a method in which a processor performs at least one method step.

A processor in the context of the present disclosure can be a machine or electronic circuit. A processor can be specifically implemented by a central processing unit (CPU) or a microprocessor or a microcontroller, e.g., an application-specific integrated circuit (ASIC) or a digital signal processor, possibly in combination with a memory unit for storing program code, etc. A processor can alternatively or additionally be implemented by an integrated circuit (IC), specifically a field programmable gate array (FPGA), an ASIC or a digital signal processor (DSP) or a graphic processing unit (GPU). Alternatively or additionally, a processor can be implemented by a virtual processor or a virtual machine or a soft CPU. A processor can be implemented by a programmable processor having configuration interfaces that facilitate configuration of various techniques described herein. The programmable processor can be configured to implement method steps as described herein, components, modules, or other aspects of the techniques described herein.

A "memory unit" or "memory module" or the like can be implemented by a volatile memory in the form of random access memory (RAM) or a non-volatile memory such as a hard disc or data carrier.

A "module", in the context of the present disclosure, can be implemented by a processor and/or a memory unit for storing program instructions. A module can be implemented in hardware and/or software and/or firmware. For example, the processor can be configured to execute the program instructions such that the processor executes functions that implement methods or steps of a method as described herein. A module can also be a node of a DBS that implements specific functions/features of the respective module. The respective modules can, e.g., be implemented as separate/individual modules. For this, the respective modules can include further elements. For example, these further elements can be one or more interfaces (e.g., database interfaces, communication interfaces - e.g., a network interface or WLAN interface) and/or an evaluation unit (e.g., a processor) and/or a memory unit. By means of the interfaces, it is possible to exchange data (e.g., to receive, communicate, transmit or provide data). By means of an evaluation unit, it is possible to compare, validate, process, assign or calculate data in a computer-implemented and/or automated manner. By means of the memory unit, data can be stored, retrieved or provided in a computer-implemented and/or automated manner. It would also be possible that multiple modules are implemented by a common processor.

The term "include" - specifically with respect to data and/or information - can relate to a (computer-implemented) storing of respective information or the respective date in a data structure/data set (which, e.g., in turn is also stored in a memory unit) in the context of the present disclosure.

The term "assign" - specifically in relation to data and/or information - can relate to a computer-implemented assignment of data and/or information in connection with the present disclosure. For example, a first date is assigned, by means of a memory address or a unique identifier, a second date, e.g., by storing the first date together with the memory address or the unique identifier of the second date in a data set.

The term "providing" - in particular in regard to data and/or information - can relate to a computer-implemented providing in connection with the present disclosure. Said providing may be implemented by an interface, e.g., a database interface, a network interface, an interface to a memory unit. It is possible that respective data and/or information are communicated and/or transmitted and/or retrieved and/or received when providing via the interface.

The term "providing" can also relate to a loading or saving, e.g., of a transaction together with respective data in the context of the present disclosure. For example, this can be implemented on or by a memory module.

The term "providing" can also relate to communicating (or transmitting or receiving or transfer) of respective data from a node to another node of the blockchain or the DBS (respectively of the corresponding infrastructure) in the context of the present disclosure.

A "smart-contract process" can refer to the execution of program code, e.g., of a control instruction, in a process by means of the DBS or the respective infrastructure.

A "checksum", e.g., a data-block checksum, a data checksum, a node checksum, a transaction checksum, a chaining checksum or the like can relate to a cryptographic checksum or a cryptographic hash or hash value, in the context of the present disclosure. Such checksums can, in particular, be determined across a data set and/or data and/or one or more transactions and/or a subsection of a data block, e.g., the block header of a block of the blockchain or the data block header of a data block of a DBS or only a part of the transaction of a data block. A checksum can be specifically implemented by a checksum or checksums or a hash value or hash values of a hash tree, e.g., a Merkle tree, a Patricia tree. Moreover, a "checksum" can also be implemented by a digital signature or a cryptographic message authentication code. By means of checksums, it is possible to implement cryptographic protection/protection against manipulation for transactions and the associated data and datasets on various levels of the DBS. For example, if there is a need for an increased level of security, it would be possible to create and validate checksums on transaction level. For example, if a reduced level of security is required, then it would be possible to create and validate checksums on block level - e.g., across the entire block or only across a part of the data block and/or a part of the transaction.

A "data-block checksum" can relate to a checksum which is calculated across a part or all transactions of a data block in the context of the present disclosure. A node can validate/determine the integrity/authenticity of the respective part of the data block by means of data-block checksums. Alternatively or additionally, the data-block checksum can also be formed across transactions of a preceding data block/predecessor data block. The data-block checksum can, in particular, be implemented by means of a hash tree, e.g., a Merkle tree [1] or a Patricia tree. Here, the data-block checksum can be the root checksum of the Merkle tree of the Patricia tree or of another binary hash tree. It would be possible that transactions are saved by means of further checksums from the Merkle tree or the Patricia tree, respectively, e.g., by using the transaction checksums, wherein in particular the further checksums can relate to leaves of the Merkle tree or the Patricia tree, respectively. The data-block checksum can, thereby, protect the transaction by forming the root checksum from the further checksums. The data-block checksum can, in particular, be calculated for the transactions of a specific data block of the data blocks. In particular, such a data-block checksum can be included in a subsequent data block of the given data block, e.g., to chain this subsequent data block with the preceding data blocks and, in particular to make the integrity of the DBS testable. Thereby, the data-block checksum can implement the chaining checksum or, at least, go into the chaining checksum. The header of a data block (e.g., of a new data block or a data block for which the data-block checksum is determined) can include the data-block checksum.

A "transaction checksum" can relate to a checksum which is determined across a transaction of a data block, in connection with the present disclosure. In addition, the calculation of the data-block checksum of a respective data block can be accelerated, because for this already calculated transactions checksums can be readily used as leaves of a Merkle tree.

A "chaining checksum" in the context of the present disclosure can relate to a checksum which for the respective data block of a DBS indicates or references to a preceding data block of the DBS - which is often referred to as "previous block hash" in literature [1]. For this, in particular, a respective chaining checksum is determined for the preceding data block. The chaining checksum can be implemented, e.g., by a transaction checksum or a data-block checksum of a data block, i.e., of an existing data block of the DBS; to thereby chain a new data block with a (existing) data block of the DBS. For example, it would also be possible that a checksum is determined across a header of the preceding data block or across the entire preceding data block to be used as a chaining checksum. For example, this could also be calculated for multiple or all of the preceding data blocks. For example, the chaining checksum could also be implemented by a checksum determined across the header of a data block in the data-block checksum. A respective data block of the DBS includes, however, preferably a chaining checksum that has been calculated or relates to a preceding data block, specifically, the next-neighbor preceding data block directly adjacent to the respective data block. For example, it would also be possible that a respective chaining checksum is determined only across a part of the respective data block, e.g., the preceding data block. Thereby, a data block can be implemented which has an integrity protected part and a non-protected part. Thereby, a data block can be implemented that has a non-changeable integrity protected part and that has a non-protected part that can be modified later on. Integrity protected can mean that a change of the integrity protected data can be detected by means of a checksum.

Next, example implementations of a transaction are described.

The data - that is, e.g., stored in a transaction of a data block - can be provided in various manners. Instead of data - e.g., user data such as measurement data or data/ownership structure regarding ASICs - a transaction of a data block can rather include the checksum for such data. The respective checksum can be implemented in various manners. For example, a respective data-block checksum of a data block, e.g., including the respective data, of another database or of the DBS, a transaction checksum of a data block of the respective data, e.g., of the DBS or of another database, or a data checksum determined across the data can be used.

In addition, the respective transaction can optionally include a link to or an indication of a memory position - e.g., an address of a file server and indications where the respective data are to be found on the file server; or an address of another DBS which includes the data. The respective data could, e.g., also be provided in a further transaction of a further data block of the DBS - e.g., if the respective data and the associated checksums are included in different data blocks. It would also be possible that those data are provided via another communication channel - e.g., via another database and/or a cryptographically-secured communication channel.

Further, it would be possible that in addition to the checksum an add-on data set - e.g., a link or an indication to a memory position - is provided in the respective transaction. The add-on data set can, in particular, indicate where the data can be retrieved. This can be helpful to limit the amount of data of the blockchain or of the DBS.

The term "security protected" can, specifically, relate to a protection that can be implemented by a cryptographic method. For example, this can be implemented by using a DBS for the providing or communication or transmitting of respective data/transactions. This can be implemented by a combination of the various checksums - e.g., cryptographic - , by appropriate synergetic interaction between the checksums, to, e.g., increase the security or the cryptographic security for the data of the transactions. In other words, "security protected" in the context of the present disclosure can also relate to "cryptographically protected" and/or "protected against manipulation", wherein "protected against manipulation" can also be referred to as "protected integrity".

Insertion of transactions into a DBS can include chaining of data blocks of a DBS. The term "chaining of data blocks of a DBS" in the connection of the present disclosure can relate to the data blocks respectively including information (such as the chaining checksum) which links to another data block or multiple other data blocks of the DBS [1], [4], [5].

Insertion of transactions into a DBS can include saving the transactions in one or more data blocks of the DBS.

Insertion of transactions can include validating and/or confirming transactions.

The term "insertion of transactions into the DBS" and the like can relate to communicating a transaction or transactions or a data block including the transactions to one or more nodes of a DBS. If those transactions are successfully validated, e.g., by means of the one or more nodes, these transactions can be chained as a new data block with at least one existing data block of the DBS [1], [4], [5]. For this, the respective transactions are stored in a new data block. In particular, this validating and/or chaining can be implemented by a trusted node, e.g., a mining node, a blockchain oracle or a blockchain platform.

In particular, a blockchain can relate to a blockchain as a service, such as has been proposed by Microsoft or IBM. In particular, trusted nodes and/or other nodes can deposit a node checksum, e.g., a digital signature, in a data block, e.g., in a data block that has been validated by the respective node and which is then chained, in particular to facilitate identification of the creator of the data block and/or identification of the node. Here, the node checksum indicates which node has chained the respective data block with at least one other data block of the DBS.

A "transaction" or "transactions" in connection with the present disclosure can relate to a smart contract [4], [5], a data structure or a transaction data set, which, in particular, respectively include a transaction or multiple transactions. The term "transaction" or "transactions" can also relate to the data of a transaction of a data block of a blockchain, in connection with the present disclosure. A transaction can, e.g., include a program code which, e.g., implements a smart contract. For example, a transaction can also relate to a control transaction and/or a confirmation transaction in the context of the present disclosure. Alternative, a transaction can also be implemented by a data structure which saves the data (e.g., the control instructions and/or the contract data and/or other data such as video data, user data, measurement data etc.).

In particular, the term "saving transactions in data blocks", "saving transaction" and the like can relate to a direct saving or indirect saving. A direct saving can relate to the respective data block of the DBS or the respective transaction of the DBS including the respective data. An indirect saving can relate to the respective data block or the respective transaction including a checksum and, optionally, an add-on data set, e.g., a link to or an indication of a memory location for respective data; hence, the respective data are not directly saved in the data block (or the transaction). Rather, a checksum is provided for these data in the data block. In particular, these checksums can be validated when saving transactions in data blocks, such as has been explained above with respect to "inserting into the DBS".

A "program code" - such as a smart contract - can relate to a program instruction or multiple program instructions which are saved in one or more transactions, in connection with the present disclosure. The program code can be executable and can be executed, e.g., by the DBS. This can be implemented, e.g., by a runtime environment, e.g., of a virtual machine, wherein the runtime environment or the program code are preferably Turing complete. The program code is preferably executed by the infrastructure of the DBS [4], [5]. Here, a virtual machine is implemented by the infrastructure of the DBS. It is possible to execute the program code when validating a corresponding transaction.

A "smart contract" can relate to an executable program code in connection with the present disclosure [4], [5] - see, in particular, explanations with respect to "program code" provided above. The smart contract is preferably saved in a transaction of the DBS - e.g., a blockchain -, e.g., in a data block of the DBS. For example, the smart contract can be executed in the same manner as has been described in connection with the definition of "program code", in particular in connection with the subject disclosure.

The term "proof of work" can relate to solving a computationally expensive task, in particular, depending on the content of a data block or the content of a specific transaction, in connection with the present disclosure [1], [4], [5]. Such a computationally expensive task can also be referred to as cryptographic puzzle.

The term "DBS", which can also be referred to simply as "distributed database", can generally relate to a decentralized, distributed database, a blockchain, a distributed ledger, a distributed memory system, a distributed ledger technology (DLT) based system (DLTS), a revision secure database system, a cloud, a cloud-service, a blockchain in a cloud or a peer-to-peer database system, in the context of the present disclosure. Also, various implementations of a blockchain or of a DLTS can be used, e.g., such as a blockchain or a DLTS that is implemented by means of a directed acyclic graph (DAG), a cryptographic puzzle, a hash graph or a combination of these variants [6], [7]. It would also be possible to implement different consensus algorithms. For example, a consensus algorithm can be implemented by means of a cryptographic puzzle, a gossip about gossip, a virtual voting or a combination of such techniques (e.g., gossip about gossip combined with virtual voting) [6], [7]. For example, if a blockchain is used, then this can, in particular, be implemented by a bitcoin-based implementation or an Ethereum-based implementation [1], [4], [5]. The term "distributed database" can also relate to a DBS that has at least a part of its nodes and/or devices and/or infrastructure implemented by a cloud. For example, the respective components can be implemented as nodes/devices in the cloud (e.g., as virtual nodes in a virtual machine). This can be implemented by WMware, Amazon web services or Microsoft Azure. Due to the increased flexibility of the described implementation scenarios, it is, in particular, possible to combine partial aspects of the described implementation scenarios with each other, e.g., by using a hash graph as blockchain, wherein the blockchain itself can also be a block batch.

For example, if a directed acyclic graph (DAG) is used (e.g., IOTA or Tangle), transactions or blocks or nodes of the graph are connected with each other via directed edges. I.e., (all) edges are (always) having the same direction, e.g., as observed for time. In other words it is, in particular, not possible to propagate through or visit transactions or blocks or nodes of the graph backwards (i.e., opposite to the common unified direction). Acyclic means, in particular, that there are no loops or ring closures when traversing the graph. For example, a DBS can relate to a public DBS (e.g., a public blockchain) or a closed (private) distributed databased system (e.g., a private blockchain).

For example, in the case of a public DBS, the nodes and/or devices can join the DBS without proof of authorization or authentication or login credentials, respectively be accepted by the DBS without such information. In particular, in such a case the operator of the nodes and/or devices can remain anonymous.

For example, in the case of implementation of the DBS by a closed database system, new nodes and/or devices can require a valid proof of authorization and/or valid authentication information and/or valid credentials and/or valid login information to join the DBS or be accepted by the DBS.

A DBS can also be implemented by a distributed communication system for data exchange. For example, this can be a network or a peer-to-peer network.

The term "data block" - that can be, depending on the context and implementation, also be referred to as "constituent" or "block" - can refer to, in the context of the present disclosure, a data block of a DBS - e.g., a blockchain or a peer-to-peer database -, which are, in particular, implemented as a data structure and, preferably, include one of the transactions or multiple of the transactions. In an implementation, the database or the database system can be a DLT based system (DLTS) or a blockchain and the data block can be a block of the blockchain or of the DLTS.

As a general rule, a data block can, e.g., include indications of the size - e.g., data volume in bytes- of the data block, a data block header (block header), a transaction counter and one or more transactions [1]. The data block header can include a version, a chaining checksum, a data-block checksum, a timestamp, a proof of work, a Nonce - i.e., a unique value, a random value or a counter which is used for the proof of work [1], [4], [5]. A data block can, e.g., also simply relate to a respective memory range or address range of the overall data that is stored in the DBS. Thereby, it is possible to implement blockless DBS such as the IOT chain (ITCA), IOTA, Byteball, etc. Here, the functionality of the blocks of a blockchain and of the transactions are combined with each other in such a manner that, e.g., the transactions themselves secure the sequence or chains of transactions of the DBS, such that they are, in particular, saved in a secured manner. For this the transactions can be chained by means of a chaining checksum, e.g., by using a separate checksum or the transaction checksum of one or more transactions as chaining checksum, which is saved in a new transaction in the DBS when storing the new transaction in the DBS. In such a scenario, a data block can, e.g., also include one or more transactions, wherein in a simple scenario a data block relates to a single transaction.

The term "Nonce" can relate to, in connection with the present disclosure, a cryptographic nonce - which is an abbreviation for "used only once" [2] or "number used once" [3]. In particular, a Nonce indicates individual numbers or a combination of letters that is preferably only used once in the respective context, e.g., transaction, data communication.

The term "preceding data blocks of a (given) data block of the DBS" can relate, in connection with the present disclosure, e.g., to the data block of the DBS that is a direct predecessor of the (given) data block. Alternatively, the term "preceding data blocks of a (given) data block of the DBS" can also relate to all data blocks of the DBS that precede the given data block. Thereby, the chaining checksum or the transaction checksum can be determined across the direct preceding data block (respectively the transactions thereof) or all data blocks preceding the given data block (respectively the respective transactions).

The terms "blockchain node", "node", "node of a DBS" and the like can relate, in the context of the present disclosure, to devices - e.g., mobile devices, wireless communication devices, computers, smartphones, clients or participants - that perform operations associated with the DBS, e.g., a blockchain [1], [4], [5]. Such nodes can, e.g., execute transactions of a DBS or the respective data blocks or can insert new data blocks including new transactions into the DBSs by means of new data blocks. In particular, this validation and/or chaining can be implemented by a trusted node, e.g., a mining node, or exclusively by trusted nodes. A trusted node is a node that has additional security measures - e.g., firewalls, access restrictions to the node or the like - to avoid manipulation of the node. Alternatively or additionally, a trusted node can, e.g., save a node checksum - e.g., a digital signature or a certificate - in the new data block when chaining the new data block with the DBS. Thereby, it is possible to provide the proof that indicates that the respective data block has been inserted by a specific node, respectively indicate the originator.

As a general rule, device or the devices can be implemented by devices of a technical system and/or an industrial plant and/or an automation network and/or a fabrication plant, that can also be nodes of the DBS. Thereby, the devices can be mobile devices or devices of the Internet of things, that can also be nodes of the DBS. Nodes can, e.g., include at least one processor, e.g., to execute their computer-implemented functionality.

The term "blockchain oracle" and the like can relate, in the context of the present disclosure, to nodes, devices or computers that include a security module that has software protection mechanisms - e.g., cryptographic methods - , mechanical protection mechanisms - e.g., a lockable housing - or electric protection measures - e.g., tamper protection or a protection system that deletes data of the security module in the case of unauthorized use/modification of the blockchain oracle. The security module can include, e.g., cryptographic keys that are required for the calculation of checksums - e.g., of transaction checksums or node checksums.

The term "computer" or "device" can relate to a computer (system), a client, a smartphone, a device or a server that are arranged outside of the blockchain, respectively or are not participants of the DBS, e.g., of the blockchain, i.e., do not execute operations of the DBS or simply retrieve those without executing transactions, inserting data blocks or calculate proof of works. Alternatively, the term "computer" or "device" can also relate to a node of the DBS. In other words, a device can in particular implement a node of the DBS or a device outside of the blockchain and the DBS, respectively. A device outside of the DBS can, e.g., access the data - e.g., the transactions or the control transactions - of the DBS. A device outside of the DBS can be controlled by nodes - e.g., by means of smart contracts and/or blockchain oracles. For example, if a control of a device - e.g., a device implemented as a node or a device outside of the DBS - is implemented by a node, then this can occur via a smart contract which, in particular, is saved in a transaction of the DBS.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a DBS implemented by a blockchain including multiple blocks according to various examples.
FIG. 2 is a flowchart of a method according to various examples.
FIG. 3 schematically illustrates a device according to various examples.
FIG. 4 schematically illustrates a device according to various examples.
FIG. 5 schematically illustrates a device according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of saving transactions in a DBS are described. Example implementations of the DBS include a blockchain including multiple blocks. A transaction may include data or may be indicative of the data, e.g., by providing a link to the data using add-on information. For example, the transaction may include a checksum of the data. By saving transactions in the DBS, unauthorized manipulation of the transactions and the associated data may be avoided.

Hereinafter, techniques are described which facilitate tailoring of insertion of the transactions into the DBS. Specifically, techniques are described that facilitate timely and/or reliable insertion of transactions into the DBS. For example, the techniques described herein may facilitate guaranteeing fulfillment of certain quality of service (QoS) levels imposing constraints on the insertion of the respective transactions.

Various techniques described herein are based on the finding that sometimes there may be limited computational resources available for the insertion of transactions into the DBS. For example, the insertion of a given transaction into the DBS may require validation of the respective transaction and/or chaining of a block of the DBS including the transaction. Mining tasks may need to be fulfilled, e.g., to obtain a proof-of-work or proof-of-stake. Further, various techniques are based on the finding that such limited computational resources can result in a congestion scenario in which a backlog of unconfirmed transactions queued for the insertion into the DBS is experienced. For example, unconfirmed transactions may be buffered in a buffer queue until computational resources become available or can be scheduled for the insertion of one or more of the unconfirmed transactions. On the other hand, such buffering of unconfirmed transactions results in less predictable system behavior associated with the insertion of the unconfirmed transactions. For example, a time-to-insertion of a given transaction cannot be easily predicted. Also, this time-to-insertion may vary from transaction to transaction, effectively creating jitter. Further, the time-to-insertion can become significant, thereby effectively creating latency and the insertion of transactions. Transactions may become outdated or a reliability of the DBS may be compromised. According to the various examples described herein, it becomes possible to better manage the insertion of transactions in view of such constraints imposed by limited computational resources.

The techniques described herein can be implemented by a device. The device may be part of an infrastructure of a DBS or may be outside of the infrastructure of the DBS. For example, the device may implement a node of the infrastructure of the DBS. It would also be possible that the device implements a gateway to the infrastructure of the DBS.

According to examples, techniques of traffic shaping are applied to multiple transactions queued for insertion into the DBS. For example, by using such techniques of traffic shaping, it becomes possible to prioritize insertion of certain transactions over insertion of other transactions. Thereby, transaction-specific prioritization becomes possible. By such transaction-specific prioritization, it becomes possible to better meet varying QoS levels in a scenario where computational resources for insertion into the DBS are limited.

According to an example, a device includes a receive module. The receive module is configured to receive a plurality of transactions for insertion in the DBS. The device also includes a classify module that is configured to classify each transaction of the plurality of transactions in accordance with a plurality of categories. The device also includes a buffer module. The buffer module is configured to maintain, for each category of the plurality of categories, a respective buffer queue that includes the respectively classified transactions of the plurality of transactions. Also, the device includes a prioritize module which is configured to prioritize insertion of the plurality of transactions into a DBS across the buffer queues.

Classifying the transactions in accordance with the plurality of categories can correspond to forming transaction pools. Transactions included in the same transaction pool can be comparable with respect to each other, i.e., have one or more identical or corresponding characteristics. For example, it would be possible that the plurality of categories correspond to multiple QoS levels. Then, transactions having the same QoS level - e.g., defined with respect to at least one of rate, delay, and jitter - may be classified into the same categories and, hence, be part of the same transaction pool. In another example, transactions classified into the same category can have a common originator. For example, the originator may be a signee of a transaction. In yet another example, transactions classified into the same category can be associated with the same contracting parties. It is generally possible to classify according to one or more classification criteria, e.g., as mentioned above. In yet another example, transactions classified into the same category can have the same information element, e.g., value range of a given variable or target address.

By prioritizing the insertion of the plurality of transactions into the DBS across the buffer queues, transactions included in different buffer queues can be more often/less often passed on towards insertion into the DBS, depending on the respective priority. In other words, prioritizing across multiple buffer queues can correspond to favoring/penalizing transactions depending on the particular buffer queue - and, hence, in turn also with respect to the respective category. For example, prioritizing across multiple buffer queues can correspond to deviating from a round-robin selection scheme in which transactions are selected in a strict cyclic sequence from the various buffer queues. In some examples, prioritizing the insertion of the plurality of transactions can be associated with scheduling the insertion, because the prioritization can control the access to computational resources required for the insertion of the plurality of transactions into the DBS. By such prioritization, use of limited resources available for the insertion into the DBS can be tailored to the respective constraints or needs associated with the categories associated with the buffer queues. For example, by such techniques of prioritizing the insertion of the plurality of transactions across the buffer queues, it becomes possible to better meet QoS levels, at least on average. It is possible that transactions of a first category are handled timely as expected even if the buffer queue of transactions of a second category is overloaded.

Hereinafter, various techniques will be described with respect to an implementation of a DBS using a blockchain. However, as a general rule, it would be possible to implement the respective techniques using other technologies.

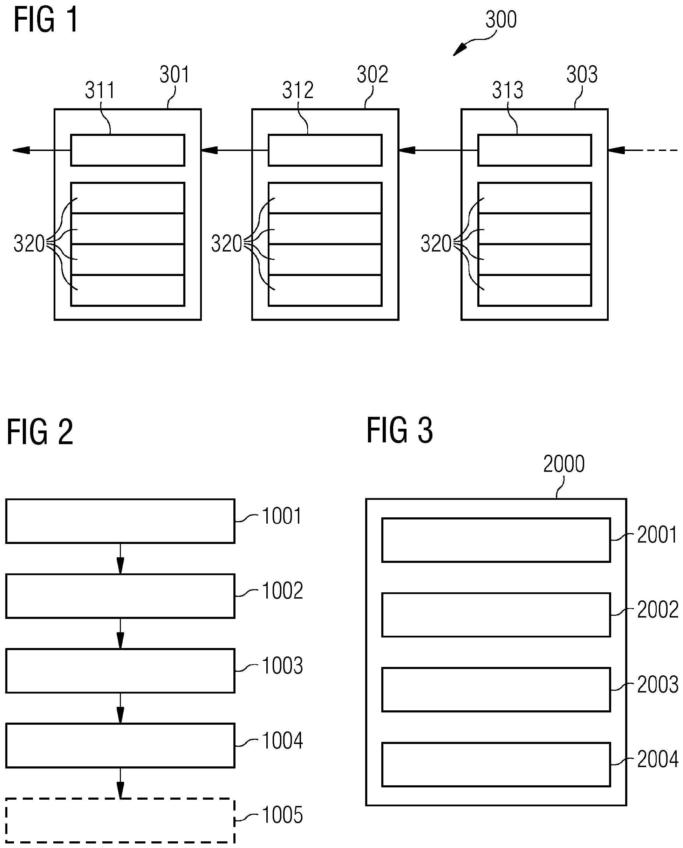

FIG. 1 schematically illustrates aspects with respect to a blockchain 300. The blockchain 300 includes multiple blocks 301-303. Specifically, the blockchain 300 includes a sequence of blocks. Each block 301-303 includes a chaining checksum 311-313, e.g., implemented by a hash value. The checksum 311 - 313 is determined based on a preceding block 301-303 in the sequence: e.g., the checksum 312 of the block 302 is determined based on the block 301 (as illustrated by the respective arrow in FIG. 1). Thereby, modification of the block 301 can be detected by comparing the block 301 with the checksum 312. For example, a block checksum could be use.

Each block 301-303 also includes transactions 320. Each transaction 320 can include respective data or can be indicative of respective data, e.g., by including a respective link or including add-on information or including a respective checksum, etc..

As a general rule, a transaction 320 can be indicative or include program code as a smart contract. For example, the transaction 320 can reference to the program code. For example, the program code can - upon execution as part of validation of the respective transaction 320 - indicate which transactions are allowed/are prohibited. Thereby, various business transactions can be flexibly implemented by a common blockchain infrastructure.

For example, a hash tree can be used, e.g., a Merkle tree or a Patricia tree, and the root hash value can be deposited in a respective block 301-303.

A block 301-303 can also include a timestamp, a digital signature, a proof of the work, etc.. The proof of work is the solution to a computationally expensive task that depends on the content of the block and that may be required to be solve when inserting the respective block 301-303 into the blockchain 300; sometimes, such a computationally expensive task is also referred to as cryptographic puzzle. It would also be possible to use other techniques, e.g., a "proof of stake" or a "permissioned ledger" that can be used by authenticated, authorized users.

FIG. 2 is a flowchart of a method according to various examples. The method of FIG. 2 may be computer-implemented on a device, e.g., an infrastructure node of the blockchain 300 or a gateway node for accessing the infrastructure of the blockchain 300.

Initially, at box 1001, a plurality of transactions are received, for the purpose of inserting the transactions into the blockchain.

For example, the transactions may be received from a node of an industrial automation system. The transactions may be indicative of an operational state of the industrial automation system. Examples of industrial automation systems include: power plants; energy transportation networks, energy distribution networks; railway signaling systems; building automation systems; vehicles such as trains or airplanes; server farms; engines; production lines for manufacturing products; etc..

Next, at box 1002, each transaction of the plurality of transactions is classified. This classification of box 1002 is in accordance with a plurality of categories. For example, an overlap of one or more classification criteria - e.g., defined by a transaction classification policy - with respective constraints of the plurality of categories may be determined when classifying at box 1002; then, if a large overlap is achieved for a given category of the plurality of categories, the respective transaction may be classified into the given category. To determine the overlap or, generally, to classify, it is possible to inspect a content of the transaction. For example, a payload of each transaction may be inspected. This may include applying of some classification logic to translate between the result of the inspection and the classification. In another example, at least some of the transactions may already be indicative - e.g., explicitly indicative - of the category.

As a general rule, various categories are conceivable. Examples include categories that are associated with an originator of the transactions, a smart contract associated with the transactions, a QoS level associated with the transactions, and an information element of the transactions.

For example, the transaction classification policy may be received via a configuration interface of the device or may be indicated by another transaction, i.e., by a configuration transaction. The configuration transaction may have been previously inserted into the blockchain.

Next, at box 1003, a respective buffer queue is maintained for each category of the plurality of category. Depending on the classification of box 1002, a given transaction is included in the respective buffer queue of the associated category.

Each buffer queue may be implemented by at least a certain fraction of a memory. A buffer queue may, as a general rule, include a sequence of transactions. A buffer queue may employ a "first in - first out" principle, in accordance with such a sequence of transactions.

By means of buffer queues, it is possible to compensate for peaks in the inflow rate of transactions that cannot be readily processed by the available computational resources for the insertion into the blockchain and/or for validation of the transactions.

In some examples, it would be possible to prioritize transactions within a buffer queue - e.g., by changing the sequence of buffered transactions within a buffer queue.

At box 1004, a prioritization is implemented across the multiple buffer queues. The prioritization is with respect to the insertion of the buffered transactions into the blockchain, at optional box 1005.

By prioritizing across multiple buffer queues, transactions included in a first buffer queue can be passed onwards for the insertion with prioritization over a transactions included in a second buffer queue.

As a general rule, various options exist to implement the prioritization. In one example, retrieving transactions from a first buffer queue can occur more often than retrieving transactions from a second buffer queue, e.g., relatively with respect to a count of transactions in the respective queue or in absolute terms. This prioritizes the first buffer queue over the second buffer queue. Generally, a relative outflow rate - towards an insert module configured to insert the transactions into the blockchain - of the various buffer queues may be set accordingly. In a further example, prioritizing can include discarding transactions from one or more of the buffer queues. For example, in a congestion situation, discarding transactions from the second buffer queue may occur more often than discarding transactions from the first buffer queue. This again prioritizes the first buffer queue over the second buffer queue.

As a general rule, insertion of the transactions into the blockchain can be implemented in various ways, in box 1005. For example, in one scenario, a transaction may be provided to a blockchain infrastructure node upon retrieval from the respective buffer queue. Then, the transaction may be inserted into the blockchain by another node of the infrastructure of the blockchain. In another scenario, insertion of the transactions into the DBS may be implemented at the same device that also implements boxes 1001-1004.

FIG. 3 schematically illustrates a device 2000. For example, the device 2000 may be configured to perform the method according to the example of FIG. 2.

The device 2000 includes a receive module 2001 configured to perform actions associated with box 1001 (cf. FIG. 2).

The device 2000 also includes a classify module 2002 configured to perform actions associated with box 1002 (cf. FIG. 2) .

The device 2000 also includes a buffer module 2003 configured to perform actions associated with box 1003 (cf. FIG. 2).

The device 2000 also includes a prioritize module 2004 configured to perform actions associated with box 1004 (cf. FIG. 2) .

The device 2000 may optionally also include an insert module (not illustrated in FIG. 3) configured to perform actions associated with box 1005 (cf. FIG. 2). In other examples, the insert module may be part of another device, e.g., implementing an infrastructure node of the blockchain.

The various modules of the device 2000 can be implemented in hardware and/or software.

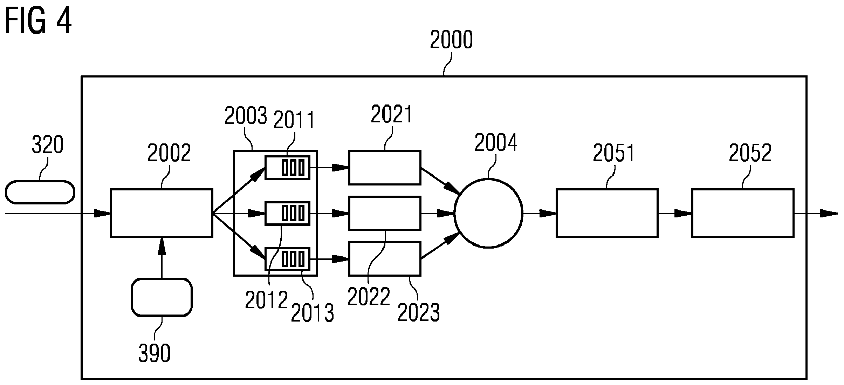

FIG. 4 schematically illustrates aspects with respect to traffic shaping for transactions to be inserted into a blockchain. Specifically, FIG. 4 illustrates further details with respect to the device 200.

In the example of FIG. 4, the device 2000 is implemented by a node of the infrastructure of the blockchain. However, techniques described below in connection with FIG. 4 may be readily applied to a scenario in which the device 2000 is implemented by an external node, not part of the blockchain.

The device 2000 receives a transaction 320 to be inserted into the blockchain. The transaction 320 is then classified by the classify module 2002. This classification is in accordance with a plurality of categories which - in the illustrated example of FIG. 4 - are specified by a transaction classification policy 390.

For example, the transaction classification policy 390 may be predefined or may be received via a configuration interface of the device 2000. In another example, it would be possible that the transaction classification policy 390 is indicated by another transaction 320 that is inserted into the blockchain 300. As such, such configuration transaction 320 that is indicative of the transaction classification policy 390 may not include payload data, but rather include configuration data.

As a general rule, various implementations of the plurality of categories and the associated classification are conceivable. For example, the plurality of categories may be associated with an originator of the transactions 320, a smart contract associated with the transactions 320, a QoS level associated with the transactions 320, and an information element of the transactions 320.

To give an example, certain transactions 320 having comparable QoS levels - e.g., comparable delay or jitter constraints - may be classified into the same category. To give a further example, certain transactions 320 having comparable or same originators - e.g., originators from the same originator pool, etc. - may be classified into the same category. To give a further example, certain transactions 320 pertaining to comparable smart contracts - e.g., in the same business field, or having the same or at least overlapping contracting parties - can be classified into the same category. To give yet a further example, certain transactions 320 having the same or corresponding information elements - e.g., the same or corresponding identity fields - can be classified into the same category.

In some examples, the classify module 2002 can be configured to inspect a content of each transaction 320 to classify the respective transaction 320. This may correspond to a deep transaction inspection of a payload of the transaction, going beyond mere inspection of the header of the transaction 320. For example, data of the transaction may be loaded from a remote memory, e.g., based on add-on information or a link included in the transaction, and then be inspected. Certain information required to classify the transaction may be extracted from the transaction 320. For this, it would be possible to decrypt at least a part of the transaction 320, e.g., using a pre-provisioned cryptographic keying material. Then, there may be logic which facilitates the classification depending on the inspected content of each transaction 320. In another, simple scenario, it would also be possible that each transaction 320 is already indicative of the respective category. For example, a respective flag or indicator or information field may be included in a header of the transaction 320. Then, the classification can be implemented in accordance with this indication.

Next, the buffer module 2003 is configured to maintain, for each one of the plurality of categories, a respective buffer queue 2011-2013. Here, each buffer queue 2011-2013 may be configured to buffer one or more transactions that have been classified into the corresponding category.

In the example of FIG. 4, there are multiple validation modules 2021-2023. Each validation module 2021-2023 is configured to validate transactions 320 in accordance with their sequence in the buffer queue. For example, in the scenario of FIG. 4, the validation modules 2021-2023 are configured to validate the respective transactions 320 being arranged at the top of the corresponding sequence of transactions 320 in the buffer queues 2011-2013 and then pass the validated transactions 320 onwards.

For example, it would be possible that each validation module 2021-2023 is associated with computational resources that enable to execute the validation.

As a general rule, the implementation of the validation of transactions 320 can vary depending on the particular information content of the transactions 320. For example, in the context of the crypto currency, validation of the transactions 320 can include checking an account balance of the payer and/or existence of an account of the payee. In another example, in the context of smart contracts, validation can include execution of associated program code. In any case, executing the validation may require computational resources; such that there may be a backlog that can be buffered by the buffer queues 2011-2013.

While in the scenario of FIG. 4 an implementation is illustrated in which multiple validation modules 2021-2023 are available to validate the transactions 320 buffered in each buffer queue 2011-2013, in other implementations, it would also be possible that a single validation module is provided downstream of the processing path, i.e., downstream of the prioritize module 2004.

The prioritize module 2004 is configured to prioritize insertion of the plurality of transactions 320 into the blockchain across the buffer queues 2011-2013.

For this, the prioritize module 2004 may retrieve the various transactions 320 - in some examples validated by the validation modules 2021-2023 - in accordance with a retrieval scheme. For example, the retrieval scheme may define to more often retrieve transactions 320 that have been stored in the buffer queue 2011 than transactions 320 that have been stored in the buffer queue 2013 - which corresponds to prioritizing transactions 320 that have been classified into the category associated with the buffer queue 2011 over transactions 320 that have been classified into the category associated with the buffer queue 2013. For example, such a prioritization can correspond to setting a relative outflow rate of the transactions 320 from the various buffer queues 2011-2013. For example, the outflow rate of the buffer queue 2011 may be set in relation to the outflow rate of the buffer queue 2013. For example, the outflow rate of the buffer queue 2011 may be set to a higher value than the outflow rate of the buffer queue 2013, e.g., parameterized on the count of transactions in the respective buffer queue 2011, 2013 or in absolute terms.

Next, the prioritize module 2004 forwards the unconfirmed transactions retrieved from the various buffer queues 2011-2013 for insertion into the blockchain. Thereby, insertion of the transactions 320 is in accordance with the prioritization.

In the example of FIG. 4, the device 2000 also includes an insert module 2051 that is configured to insert the transactions 320 received from the prioritize module 2004. In other examples, it would also be possible that insertion of the transactions 320 is implemented by another device, e.g., by an infrastructure node of the blockchain.

At optional publish module 2052, a new block including the confirmed transactions 320 can be published.

The insertion of transactions 320 into the blockchain can require computational resources. If the overall inflow rate of unconfirmed transactions 320 is larger than the capacity of computational resources available for the insertion, then a backlog can occur. By prioritizing the insertion across the multiple buffer queues 2011-2013 in accordance with the classification into the plurality of categories, it is possible to manage the insertion of the transactions 320 in view of the limited computational resources. Thereby, on average, constraints imposed by QoS levels that may be associated with the plurality of categories can be better met. Furthermore, the insertion of transactions 320 into the blockchain may be limited by contractual agreement by a blockchain infrastructure being used by multiple tenants.

Nonetheless, sometimes it may be required to resolve a congestion: for example, if peaks in the inflow rate of unconfirmed transactions 320 are observed, buffer overflows of the buffer queues 2011-2013 may need to be avoided.

As a general rule, it can be possible that the prioritization of the plurality of transactions 320 across the multiple buffer queues 2011-2013 includes discarding transactions 320 from one or more of the buffer queues 2011-2013. For example, transactions 320 may be primarily discarded from the buffer queue 2013 being associated with a category of lower priority. Thereby, timely insertion of transactions 320 included in the buffer queue 2011 being associated with a category of higher priority can be facilitated.

As will be appreciated from the explanations above, the prioritize module 2004 can effectively shape the flow of transactions 320 towards the insertion module 2051. Hence, the prioritize module 2004 could also be labeled transaction flow shaping module.

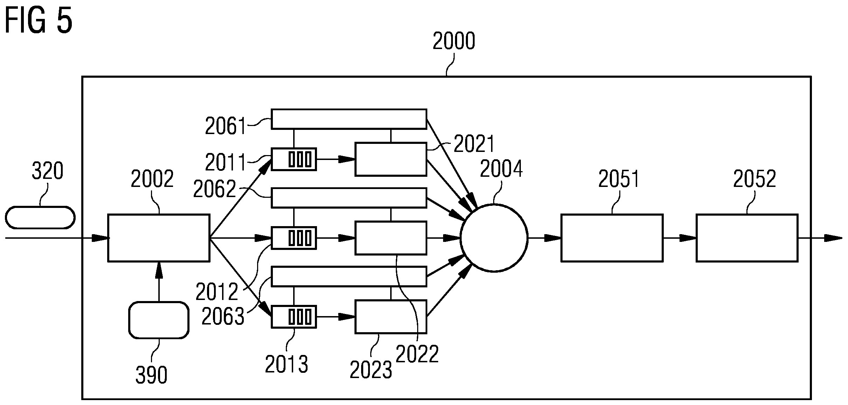

FIG. 5 schematically illustrates aspects with respect to traffic shaping for transactions to be inserted into a blockchain. The implementation of FIG. 5 generally corresponds to the implementation of FIG. 4.

In the example of FIG. 5, flow metering modules 2061-2063 are provided. These flow metering modules 2061-2063 provide flow metering data to the prioritize module 2004. Then, the prioritize module 2004 is configured to prioritize the insertion of the transactions 320 across the various buffer queues 2011-2013 based on the flow metering data that is determined for each one of the buffer queues 2011-2013.

As a general rule, various options are available for implementing the flow metering data. For example, the flow metering data could be indicative of the queue length of the respective buffer queue 2011-2013. For instance, for longer queue lengths, a tendency may exist to increase prioritization. For instance, for longer queue lengths, a tendency may exist to discard one or more transactions from the respective buffer queue.

In a further example, the flow metering data could be indicative of an inflow rate of transactions 320 into the respective buffer queue 2011-2013 and/or of an outflow rate of transactions 320 from the respective buffer queue.

In yet a further example, the flow metering data could be indicative of computational resources available for validating the transactions 320 and the respective buffer queue 2011-2013.

By using the flow metering data, it is possible to dynamically adapt the prioritization in accordance with a current traffic situation. This helps to dynamically balance prioritization between the various buffer queues, to better meet, e.g., constraints imposed by QoS levels in dynamic scenarios. Summarizing, techniques have been described which facilitate support of transactions being associated with multiple QoS levels or, generally, being associated with multiple categories. Insertion of transactions classified into one or more "important" categories can be prioritized vis-à-vis insertion of other transactions classified into one or more "unimportant" categories. According to various examples, prioritizing can also include discarding transactions. For example, one or more transactions that are classified into one or more "unimportant" categories can be discarded, e.g., in order to achieve fulfillment of QoS levels associated with one or more transactions that are classified into the one or more "important" categories. Generally, it is possible to discard transactions depending on classification into the plurality of categories. Thereby, congestion can be resolved or avoided. Load-balancing becomes possible. For example, if there is congestion within a buffer queue associated with a given categories, then it would be possible to discard one or more transactions classified within that given categories, to avoid negative impact on transactions that are classified within one or more other categories different from the given category.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various techniques have been described with respect to an implementation of a DBS by a blockchain. However, similar techniques may be readily applied to other implementations of a DBS, e.g., a distributed ledger, a distributed memory system, a DLTS, a revision secure database system, a cloud, a cloud-service, a blockchain in a cloud or a peer-to-peer database system.

### LIST OF CITATIONS

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Vol 21, Nr. 12 Dec. 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles, https://blockchainhub.net/blockchain-oracles/ (retrieved July 12, 2018)

## Claims

1. A device (2000), comprising:
- a receive module (2001) configured to receive a plurality of transactions (320) for insertion into a distributed database system,
- a classify module (2002) configured to classify each transaction (320) of the plurality of transactions (320) in accordance with a plurality of categories,
- a buffer module (2003) configured to maintain, for each category of the plurality of categories, a respective buffer queue (2011-2013) including the respectively classified transactions (320) of the plurality of transactions (320), and
- a prioritize module (2004) configured to prioritize insertion of the plurality of transactions (320) into the distributed database system across the buffer queues (2011-2013) .

2. The device (2000) of claim 1, further comprising:
- at least one validation module (2021-2023) configured to validate each transaction (320) of the plurality of transactions (320) in accordance with their sequence in the buffer queues (2011-2013).

3. The device (2000) of claim 1 or 2,
wherein the plurality of categories are associated with at least one of an originator of the transactions (320), a smart contract associated with the transactions (320), a quality of service level associated with the transactions (320), and an information element of the transactions (320).

4. The device (2000) of any one of the preceding claims,
wherein the prioritize module (2004) is configured to prioritize the insertion of the plurality of transactions (320) based on flow metering data determined for each one of the buffer queues (2011-2013).

5. The device (2000) of claim 4,
wherein the flow metering data includes at least one of a queue length of the respective buffer queue (2011-2013), an inflow rate of transactions (320) into the respective buffer queue (2011-2013), an outflow rate of transactions (320) from the respective buffer queue (2011-2013), and computational resources of validating transactions (320) in the respective buffer queue (2011-2013).

6. The device (2000) of any one of the preceding claims,
wherein the classify module (2002) is configured to inspect a content of each transaction (320) of the plurality of transactions (320) to classify each transaction (320).

7. The device (2000) of any one of the preceding claims,
wherein each transaction (320) of the plurality of transactions (320) is indicative of the respective category of the plurality of categories.

8. The device (2000) of any one of the preceding claims,
wherein a transaction classification policy (390) of the plurality of categories are indicated by at least one further transaction (320) inserted into the distributed database system.

9. The device (2000) of any one of the preceding claims,
wherein prioritizing the insertion of the plurality of transactions (320) comprises discarding transactions (320) from one or more of the buffer queues (2011-2013).

10. The device (2000) of any one of the preceding claims,
wherein prioritizing the insertion of the plurality of transactions (320) comprises setting a relative outflow rate of a first buffer queue (2011-2013) of the buffer queues (2011-2013) with respect to a second buffer queue (2011-2013) of the buffer queues (2011-2013).

11. The device (2000) of any one of the preceding claims, further comprising:
- an insert module (2051) configured to insert the transactions (320) of the plurality of transactions (320) in accordance with said prioritizing.

12. A computer-implemented method, comprising:
- receiving a plurality of transactions (320) for insertion into a distributed database system,
- classifying each transactions (320) of the plurality of transactions (320) in accordance with a plurality of categories,
- for each category of the plurality of categories:
maintaining a respective buffer queue (2011-2013) includes the respectively classified transactions (320) of the plurality of transactions (320), and
- prioritizing insertion of the plurality of transactions (320) into the distributed database system across the buffer queues (2011-2013).

13. The method of claim 12,
wherein the method is performed by the device (2000) of any one of claims 1 - 13.

## Amended claims

### Amended claims in accordance with Rule 137(2) EPC.

1. A device (2000), comprising:
- a receive module (2001) configured to receive a plurality of transactions (320) for insertion into a distributed database system,
- a classify module (2002) configured to classify each transaction (320) of the plurality of transactions (320) in accordance with a plurality of categories,
- a buffer module (2003) configured to maintain, for each category of the plurality of categories, a respective buffer queue (2011-2013) including the respectively classified transactions (320) of the plurality of transactions (320), wherein the buffer module is configured to buffer, in the respective buffer queue, the respectively classified transactions until computational resources for the insertion become available or can be scheduled, and
- a prioritize module (2004) configured to prioritize the insertion of the plurality of transactions (320) into the distributed database system across the buffer queues (2011-2013) .

2. The device (2000) of claim 1, further comprising:
- at least one validation module (2021-2023) configured to validate each transaction (320) of the plurality of transactions (320) in accordance with their sequence in the buffer queues (2011-2013).

3. The device (2000) of claim 1 or 2,
wherein the plurality of categories are associated with at least one of an originator of the transactions (320), a smart contract associated with the transactions (320), a quality of service level associated with the transactions (320), and an information element of the transactions (320).

4. The device (2000) of any one of the preceding claims,
wherein the prioritize module (2004) is configured to prioritize the insertion of the plurality of transactions (320) based on flow metering data determined for each one of the buffer queues (2011-2013).

5. The device (2000) of claim 4,
wherein the flow metering data includes at least one of a queue length of the respective buffer queue (2011-2013), an inflow rate of transactions (320) into the respective buffer queue (2011-2013), an outflow rate of transactions (320) from the respective buffer queue (2011-2013), and computational resources of validating transactions (320) in the respective buffer queue (2011-2013).

6. The device (2000) of any one of the preceding claims,
wherein the classify module (2002) is configured to inspect a content of each transaction (320) of the plurality of transactions (320) to classify each transaction (320).

7. The device (2000) of any one of the preceding claims,
wherein each transaction (320) of the plurality of transactions (320) is indicative of the respective category of the plurality of categories.

8. The device (2000) of any one of the preceding claims,
wherein a transaction classification policy (390) of the plurality of categories are indicated by at least one further transaction (320) inserted into the distributed database system.

9. The device (2000) of any one of the preceding claims,
wherein prioritizing the insertion of the plurality of transactions (320) comprises discarding transactions (320) from one or more of the buffer queues (2011-2013).

10. The device (2000) of any one of the preceding claims,
wherein prioritizing the insertion of the plurality of transactions (320) comprises setting a relative outflow rate of a first buffer queue (2011-2013) of the buffer queues (2011-2013) with respect to a second buffer queue (2011-2013) of the buffer queues (2011-2013).

11. The device (2000) of any one of the preceding claims, further comprising:
- an insert module (2051) configured to insert the transactions (320) of the plurality of transactions (320) in accordance with said prioritizing.

12. A computer-implemented method, comprising:
- receiving a plurality of transactions (320) for insertion into a distributed database system,
- classifying each transactions (320) of the plurality of transactions (320) in accordance with a plurality of categories,
- for each category of the plurality of categories: maintaining a respective buffer queue (2011-2013) includes the respectively classified transactions (320) of the plurality of transactions (320), by buffering, in the respective buffer queue, the respectively classified transactions until computational resources for the insertion become available or can be scheduled, and
- prioritizing the insertion of the plurality of transactions (320) into the distributed database system across the buffer queues (2011-2013).

13. The method of claim 12,
wherein the method is performed by the device (2000) of any one of claims 1 - 11.
